Europäisches Patentamt

European Patent Office

Office européen des brevets

(19)

(11) Numéro de publication: **0 065 920**
**B1**

(12) ## FASCICULE DE BREVET EUROPEEN

(45) Date de publication du fascicule du brevet:
**25.04.84**

(51) Int. Cl.³: **B 01 D 3/22**

(21) Numéro de dépôt: **82400916.1**

(22) Date de dépôt: **17.05.82**

(54) **Colonne de traitement, notamment d'absorption et de distillation.**

(30) Priorité: **18.05.81 FR 8109849**

(43) Date de publication de la demande:
**01.12.82 Bulletin 82/48**

(45) Mention de la délivrance du brevet:
**25.04.84 Bulletin 84/17**

(84) Etats contractants désignés:
**DE GB IT NL**

(56) Documents cités:
**CH - A - 253 469**
**DE - A - 2 137 897**
**FR - A - 1 095 931**
**FR - A - 1 225 411**
**FR - A - 1 256 055**
**US - A - 2 926 754**

(73) Titulaire: **B.S.L. (BIGNIER SCHMID-LAURENT), 25, Quai Marcel-Boyer, F-94203 Ivry-sur-Seine (FR)**

(72) Inventeur: **Taquoi, Jean-Pierre, 43 Clos des Cascades, F-93160 Noisy-le-Grand (FR)**

(74) Mandataire: **Corre, Jacques Denis Paul et al, Cabinet Regimbeau 26, Avenue Kléber, F-75116 Paris (FR)**

## Colonne de traitement, notamment d'absorption et de distillation

La présente invention concerne des colonnes de traitement, tels que notamment les colonnes d'absorption et les colonnes de distillation.

On connaît déjà des plateaux de colonne de traitement, formés d'une pluralité de tôles perforées, boulonnées entre elles et soutenues, par boulonnage, par un réseau croisé de poutres. Ledit réseau croisé de poutres est formé d'un premier réseau, dit principal, de poutres parallèles, supporté à l'intérieur de la colonne sensiblement horizontalement et d'un réseau secondaire, de poutres sensiblement horizontales parallèles entre elles et perpendiculaires aux poutres dudit premier réseau, sur lesquelles elles sont boulonnées. Des éléments support sont également disposés entre les poutres formant le réseau principal et les tôles boulonnées entre elles, formant le plateau, de façon à supporter convenablement celles-ci. Les plateaux classiques comportent, habituellement, un anneau support fixé sur la surface annulaire intérieure de la colonne, anneau sur lequel reposent les tôles perforées boulonnées entre elles.

Un tel type de plateau ne donne cependant pas entière satisfaction. En particulier, une telle structure est relativement lourde et longue à installer, notamment en ce qui concerne les colonnes de grand diamètre.

De plus, on a constaté que lesdites tôles sont le siège de flèches importantes, qui imposent un double réseau de flexion.

Enfin, les surfaces des tôles situées juste au-dessus des poutres support, ne pouvant être perforées, on comprend que le réseau croisé de poutres limite la surface utile de traitement du plateau.

On connait aussi par le document DE-A-2 137 897 des plateaux de colonne de traitement constitues par la juxtaposition d'éléments de forme triangulaire dont les angles sont maintenus par serrage entre des pièces de support verticalement juxtaposés sur toute la hauteur de la colonne et portées par des poutres horizontales solidaires de la colonne qui supporteur ainsi par l'intermediaire des pièces de serrage l'ensemble des plateaux de la colonne.

La présente invention propose un nouveau type de colonne de traitement dans laquelle chaque plateau est formé d'une galette constituée d'une pluralité de tôles soudées bout à bout, la galette étant soutenue à l'intérieur de la colonne, par un réseau de poutres parallèles entre elles et parallèles au plan de la galette, c'est-à-dire sensiblement horizontalement, reposant sur des consoles immobilisées sur la face annulaire interne de la colonne, la galette étant ellemême fixée rigidement sur son pourtour, sur la face annulaire interne de la colonne.

Selon une caractéristique de la présente invention, la galette est solidarisée par points sur le réseau de poutres.

Selon une autre caractéristique de la présente invention, la galette est solidarisée sur le réseau de poutres à l'aide d'un soudage par points.

Selon une autre caractéristique de la présente invention, la galette est solidarisée sur le réseau de poutres, à l'aide de rivets.

Selon une autre caractéristique de la présente invention, le bord de la galette est relevé de façon à faciliter l'enfilage de celle-ci dans la colonne.

Une colonne de traitement conforme à la présente invention présente, notamment, les avantages de demander relativement peu de matériaux et d'utiliser des plateaux particulièrement légers, puisqu'ils ne comportent qu'un seul réseau de poutres support, qui peut être installé plus rapidement que les réseaux existants précédemment.

Il est à noter que le plateau utilise dans la présente invention, offre plus de possibilités de fixation des accessoires. Enfin, la demanderesse a constaté que la galette forme une surface circulaire complète grâce au soudage bout à bout des différentes tôles perforées qui la constitue et au soudage de cette galette sur la colonne, ce qui permet, à ladite galette, de travailler en membrane et non plus selon un double réseau de flexion, comme cela était le cas pour certains plateaux de colonne de traitement précédemment existants. On comprend, bien entendu, qu'ainsi le travail en membrane permet d'obtenir une répartition quasi-uniforme des contraintes dans l'ensemble de l'épaisseur du plateau, et permet, par conséquent, en particulier, d'alléger considérablement celui-ci.

D'autres avantages et caractéristiques de la présente invention apparaîtront à la lecture de la description détaillée qui va suivre et en regard des dessins annexés donnés à titre d'exemple non limitatif et sur lesquels:

— la figure 1 représente une vue schématique de dessus d'un plateau d'une colonne de traitement conforme à la présente invention,

— la figure 2 représente une vue schématique en coupe d'un plateau d'une colonne de traitement conforme à la présente invention, selon une ligne de coupe référencée II-II, sur la figure 1,

— la figure 3 représente une vue schématique agrandie de la portion de plateau d'une colonne de traitement référencée III sur la figure 2.

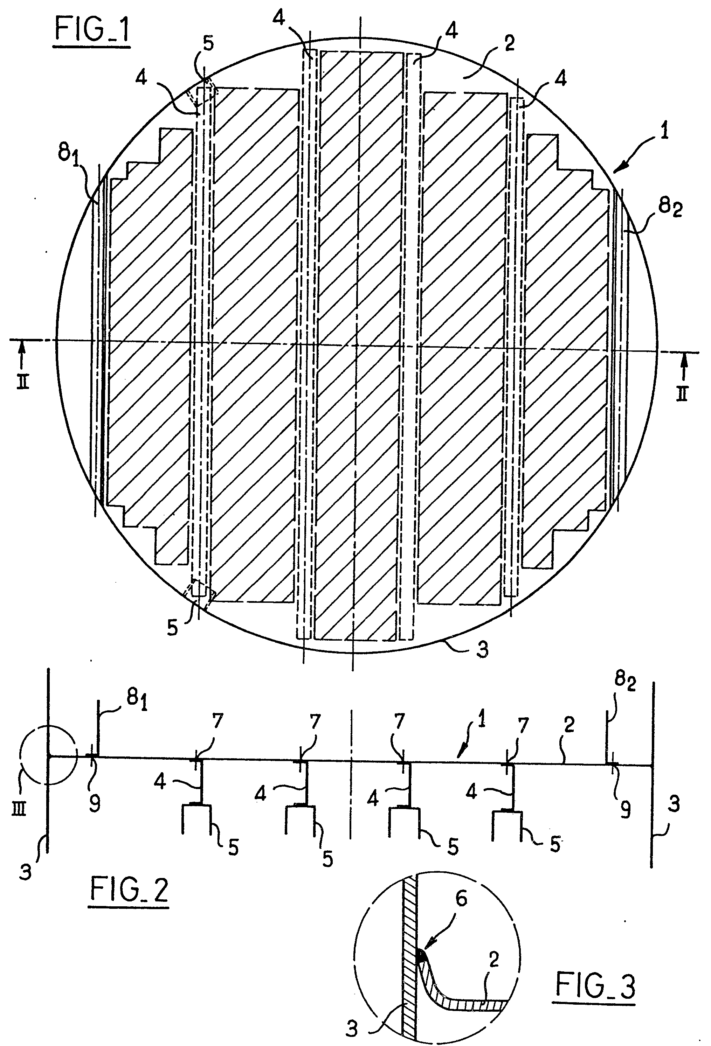

Le plateau 1 d'une colonne de traitement conforme à la présente invention, représenté en vue de dessus sur la figure 1, est formé d'une galette 2 constituée d'une pluralité de tôles soudées bout à bout par tout procédé de soudage approprié. Lesdites tôles sont de préférence munies de perforations de dimension, et de disposition adaptées au traitement donné. Les plateaux peuvent, en outre, être munis d'accessoires tels que des calottes. Les différentes zones perforées des tôles constituant la galette 2 sont schématiquement représentées sur la figure 1, par des zones hachurées.

La galette 2 est soutenue à l'intérieur de la colonne 3 par un réseau de poutres 4 sensiblement horizontales et parallèles reposant sur des consoles 5 fixées sur la face annulaire interne de la colonne 3. Sur la figure 1, on n'a représenté que deux consoles 5, supportant l'une des poutres 4. Bien entendu, il convient de prévoir deux consoles 5 fixées sur la face annulaire interne de la colonne 3, pour chacune desdites poutres parallèles 4. Selon la présente invention, il est possible d'utiliser des poutres 4, de profils divers, tels que des profils en I, U, H ..., couramment utilisés. Il s'avère, cependant, que, comme cela est représenté sur la figure 2, le profil en U est préféré.

Le profil et l'espacement des poutres 4 seront aisément calculés pour satisfaire les conditions de flèche de chaque procédé. Les poutres 4 et la galette 2 formées de différentes tôles perforées soudées bout à bout, sont elles-mêmes reliées par tout procédé approprié permettant une liaison par points 7, tel qu'un soudage par points, ou un assemblage à l'aide de rivets. Selon la présente invention, l'assemblage par rivets s'avère particulièrement avantageux. En effet, on a constaté qu'un tel assemblage assurait un meilleur comportement en membrane de l'ensemble de la galette 2, comme cela sera expliqué dans la suite de la description.

Comme cela apparaît sur les figures 2 et 3, les bords de la galette 2 sont relevés pour permettre un soudage à clin (représenté en 6) sur la colonne 3. Cet arrondi de la galette 2 facilite, en outre, l'enfilage du plateau 1, initialement conformé en galette 2 par soudage bout à bout des différentes tôles perforées constituant cell-ci, dans la colonne 3.

Bien entendu, la galette 2 peut être classiquement perforée ou équipée de différents accessoires pour satisfaire à de nombreux procédés de traitement. La présente invention s'applique, en particulier, aux plateaux simplement perforés, aux plateaux à soupapes, ou clapets, aux plateaux à fentes, aux plateaux à calottes ou tunnels.

Selon le mode de réalisation du plateau de colonne de traitement, représenté sur les figures 1 et 2, il est prévu deux barrages $8_1$, $8_2$, sensiblement diamétralement opposés, à la partie supérieure du plateau 1. De façon connue en soi, l'un des barrages $8_1$ est disposé au niveau de l'entrée d'un fluide sur le plateau 1, de façon à assurer la régularisation de l'écoulement du fluide qui va circuler, par exemple, entre les calottes. Tandis que le second barrage $8_2$, disposé à la sortie du fluide, du plateau 1, protège, par exemple, les trop-pleins contre les mousses et les projections. Selon le mode de réalisation des barrages $8_1$ et $8_2$, représentés, ceux-ci sont formés de deux poutres cornières de profil en L, rivetés ou soudés par points en 9 sur la face supérieure correspondante des tôles perforées constituant la galette 2.

Comme cela a été précédemment indiqué, la galette 2 du plateau d'une colonne de traitement conforme à la présente invention, étant constituée d'une surface circulaire complète grâce au soudage bout à bout des tôles perforées qui la constitue, il a été constaté que le plateau à la différence des plateaux de colonne de traitement précédemment existants, ne travaille pas selon un double réseau de flexion, imposé en particulier par le réseau croisé de poutres support, mais travaille en membrane et peut donc être considérablement allégé. Il a été constaté, de plus, que l'arrondi ménagé sur la périphérie de la galette, n'altère pratiquement pas le comportement en membrane de l'ensemble de la galette 2.

Outre le fait d'être relativement léger et de pouvoir être installé beaucoup plus rapidement que les plateaux de colonne de traitement précédemment existants, la présente invention entraîne une diminution importante des zones dites blanches, ou inactives du plateau situées au-dessus des poutres support.

Le plateau 1 d'une colonne de traitement conforme à la présente invention, offre donc beaucoup plus de possibilités, et de liberté de fixation de réseaux d'accessoires sur le plateau, par exemple, de serpentins, que les plateaux antérieurement connus. En particulier, lorsqu'il est prévu un écoulement de fluide, à la surface de la galette 2, par exemple, du barrage d'entrée $8_1$ au barrage de sortie $8_2$, comme cela est représenté sur les figures 1 et 2, le plateau 1 offre la possibilité de disposer les poutres 4, soit sensiblement perpendiculairement à la direction d'écoulement dudit fluide, de façon à ce que celui-ci rencontre obligatoirement des zones de traitement, ce qui permet d'obtenir de meilleures performances, soit parallèlement audit écoulement du fluide, de façon à ce que au moins une partie de celui-ci puisse suivre avantageusement une surface de la galette 2 non munie de perforations ou d'accessoires, telles que des calottes, surface correspondant à la partie supérieure des poutres 4.

L'invention est particulièrement avantageuse, dans le cas de colonnes de diamètre important.

## Revendications

1. Colonne de traitement qui comporte au moins un plateau du type formé d'un ensemble de tôles solidarisées entre elles et soutenues par un réseau de poutres lui-même supporté à l'intérieur de la colonne, caractérisée par le fait que chaque plateau est formé d'une galette (2) constituée d'une pluralité de tôles soudées bout à bout et par le fait que chaque galette (2) repose à l'intérieur de la colonne (3) sur un réseau de poutres (4) sensiblement horizontales parallèles entre elles et parallèles au plan de la galette, reposant sur des consoles (5), immobilisées sur la face interne de la colonne (3), et par le fait que chaque galette (2) est fixée rigidement sur son pourtour, sur la face interne de ladite colonne (3).

2. Colonne de traitement selon la revendication 1, caractérisé par le fait que la galette (2) est solidarisée par points (7) sur le réseau de poutres (4).

3. Colonne de traitement selon la revendication 2, caractérisé par le fait que la galette (2) est solidarisée sur le réseau de poutres (4) à l'aide d'un soudage par points (7).

4. Colonne de traitement selon la revendication 2, caractérisée par le fait que la galette (2) est solidarisée sur le réseau de poutres (4) à l'aide de rivets (7).

5. Colonne de traitement selon l'une des revendications 1 à 4, caractérisé par le fait que le bord de la galette (2) est relevé de façon à faciliter l'enfilage de celle-ci dans la colonne (3).

6. Colonne de traitement selon la revendication 5, caractérisé par le fait que le bord relevé de la galette est fixé sur la face interne de la colonne à l'aide d'un soudage à clin (6).

## Patentansprüche

1. Behandlungskolonne, die wenigstens einen Boden des Typs aufweist, der von einer Anordnung miteinander verbundener Bleche gebildet ist, die von einem selbst im Inneren der Kolonne abgestützten Balkengitter getragen sind, dadurch gekennzeichnet, daß jeder Boden von einer Mehrzahl stumpf geschweißter Bleche gebildeten Scheibe (2) gebildet ist, daß jede Scheibe (2) im Inneren der Kolonne (3) auf einem Gitter von merklich horizontalen, zueinander parallelen und zur Ebene der Scheibe parallelen Balken (4) ruht, die auf unbeweglich an der Innenfläche der Kolonne (3) gehaltenen Konsolen (5) aufliegen, und daß jede Scheibe (2) auf ihrem äußeren Umfang starr an der Innenfläche der genannten Kolonne (3) befestigt ist.

2. Behandlungskolonne nach Anspruch 1, dadurch gekennzeichnet, daß die Scheibe (2) an Punkten (7) an dem Balkengitter (4) befestigt ist.

3. Behandlungskolonne nach Anspruch 2, dadurch gekennzeichnet, daß die Scheibe (2) mittels einer Punktschweißung (7) an dem Balkengitter (4) befestigt ist.

4. Behandlungskolonne nach Anspruch 2, dadurch gekennzeichnet, daß die Scheibe (2) mittels Nieten (7) an dem Balkengitter (4) befestigt ist.

5. Behandlungskolonne nach einem der Ansprüche 1 bis 4, dadurch gekennzeichnet, daß der Rand der Scheibe (2) derart hochgezogen ist, daß das Einsetzen derselben in die Kolonne (3) erleichtert ist.

6. Behandlungskolonne nach Anspruch 5, dadurch gekennzeichnet, daß der hochgezogene Rand der Scheibe an der Innenfläche der Kolonne mittels einer Überlappungsschweißung (6) befestigt ist.

## Claims

1. Treatment column which has at least one plate of the type formed of an assembly of metal sheets fixed to each other and supported by a grid of beams itself supported inside the column, characterised by the fact that each plate is formed of a disc (2) constituted by a plurality of metal sheets soldered end to end and by the fact that each disc (2) rests inside the column (3) on a grid of beams (4) substantially horizontal and parallel to each other and parallel to the plane of the disc, resting on brackets (5), fixed on the internal surface of the column (3), and by the fact that each disc (2) is rigidly fixed on its periphery, on the internal surface of the said column (3).

2. Treatment column according to Claim 1, characterised by the fact that the disc (2) is fixed by points (7) on the grid of beams (4).

3. Treatment column according to Claim 2, characterised by the fact that the disc (2) is fixed on the grid of beams (4) with soldering at the points (7).

4. Treatment column according to Claim 2, characterised by the fact that the disc (2) is fixed on the grid of beams (4) with rivets (7).

5. Treatment column according to any one of claims 1 to 4, characterised by the fact that the edge of the disc (2) is raised in a manner to facilitate fitting of it in the column (3).

6. Treatment column according to Claim 5, characterised by the fact that the raised edge of the disc is fixed on the internal face of the column with a soldered lap-joint (6).

0 065 920

FIG_1

FIG_2

FIG_3